# EUROPÄISCHE PATENTSCHRIFT

(11) **EP 1 717 266 B1**
(45) Veröffentlichungstag und Bekanntmachung des Hinweises auf die Patenterteilung: **22.10.2008**
(21) Anmeldenummer: 06008069.4
(22) Anmeldetag: 19.04.2006
(51) Int. Cl.: C08K 3/22, C08L 67/02, C08J 5/18, B32B 27/36

(54) **Schwarze Folie aus thermoplastischem Polyester**
Black film of thermoplastic polyester
Film noir de polyester thermoplastique

(30) Priorität: 27.04.2005 DE 102005019979
(43) Veröffentlichungstag der Anmeldung: 02.11.2006
(73) Patentinhaber: Mitsubishi Polyester Film GmbH, 65203 Wiesbaden (DE)
(72) Erfinder: Kliesch, Holger, Dr., 65462 Ginsheim-Gustavsburg (DE); Kiehne, Thorsten, Dr., Nagahama Shiga, 526-0031 (JP); Hora, Franz, 65830 Kriftel (DE); Fischer, Ingo, 65558 Heistenbach (DE)
(74) Vertreter: Schweitzer, Klaus

(56) Entgegenhaltungen:
- DE-A1- 10 043 775

## Beschreibung

Die Erfindung betrifft eine ein- oder mehrschichtige, orientierte Folie aus einem Polyester, die mindestens ein anorganisches Schwarzpigment enthält.

Schwarze Polyesterfolien werden in der industriellen Praxis aus mit Ruß gefüllten (carbon black) Polyestern hergestellt und sind in der US-A 4,865,898 beschrieben. Solche Folien werden u. a. als nicht transparente Schichten in Verbunden oder anderweitig für dekorative Zwecke eingesetzt.

Die Offenlegungsschrift DE 10043775 A1 beschreibt Folien auf Polyesterbasis, die Eisenoxidschwarz enthalten. Fe₃O₄ als Beschichtung für anorganische Füllstoffe wird nicht offenbart.

Mit Ruß lässt sich eine niedrige Transparenz und ein hoher Schwarzgrad vor allem dann erreichen, wenn nanopartikuläre Ruße oder Graphite verwendet werden.

Ruße und Graphite im allgemeinen und insbesondere nanopartikuläre weisen jedoch in der Herstellung von gestreckten Polyesterfolien zwei gravierende Nachteile auf. Zum einen sind sie elektrisch leitfähig, was bei den in der Regel benutzten elektrostatischen Anlegungen die Gefahr von Überschlägen (Kurzschlüsse bzw. Entladungen zwischen der elektrostatischen Anlegevorrichtung und der Kühlwalze durch die Folie hindurch) drastisch erhöht und zum anderen haben die Ruße und Graphite als eine Folge ihrer Schmierstoffeigenschaften ein sehr schlechtes Reinigungsverhalten. D. h. es tritt eine länger als übliche Spülzeit bei der Umstellung von schwarzer Folie auf andere Folientypen im Produktionsbetrieb auf. Beide Nachteile wirken sich negativ auf die Produktivität von schwarzen Folien unter wirtschaftlichen Aspekten aus.

Aufgabe der vorliegenden Erfindung war es, eine schwarze Folien mit niedriger Transparenz und trotzdem guter Laufsicherheit herzustellen, die die beschriebenen Nachteile nicht aufweist, sondern die ohne die Gefahr von Kurzschlüssen und anderen elektrischen Entladungen im Produktionsbetrieb und ohne lang andauernde Umstellzeiten von einem Folientyp auf den anderen unter wirtschaftlichen Bedingungen großtechnisch herzustellen ist.

Gelöst wird diese Aufgabe durch eine ein- oder mehrschichtige, orientierte Folie aus einem Polyester, die mindestens ein anorganisches Schwarzpigment enthält, wobei sie mindestens eine Schicht umfasst, die neben Polyester anorganische Partikel aus Mica, Titandioxid, Siliziumdioxid oder Kalziumkarbonat enthält, die mit Fe₃O₄ beschichtet sind, wobei die Fe₃O₄-Menge in der Folie 0,5 bis 25 Gew.-% beträgt.

Die Folie weist eine Transparenz (sichtbares Licht) von < 12 %, bevorzugt < 3 % und besonders bevorzugt von kleiner 0,5 % auf. Die Foliendicke liegt im Bereich von 4 bis 500 µm, bevorzugt von 8 bis 200 µm und besonders bevorzugt zwischen 12 und 100 µm.

Erfindungsgemäß versteht man unter einem Polyester
- Homopolyester,
- Copolyester,
- Blends verschiedener Polyester,
wobei diese sowohl als reine Rohstoffe als auch als Rezyklat enthaltende Polyester-Rohstoffe eingesetzt werden können. Das Rezyklat besteht gewöhnlich aus bei der Folienherstellung anfallendem und regranuliertem Verschnittmaterial.

Polyester enthalten Wiederholungseinheiten, die sich von Dicarbonsäuren (100 Mol-%) und Diolen (ebenfalls 100 Mol-%) ableiten. Die erfindungsgemäßen Polyester basieren bevorzugt auf Terephthalsäure oder 2,6-Naphthalindicarbonsäure als Dicarbonsäurekomponente und auf Ethylenglykol als Diolkomponente. In einer weiteren Ausführungsform kann die Hauptdiolkomponente auch 1,4-Butandiol sein.

Insbesondere enthalten die für die erfindungsgemäße Folie geeigneten Polyester 10 bis 100 Mol-% Terephthalat- oder 10 bis 100 Mol-% 2,6-Naphthalateinheiten als Dicarbonsäurekomponente, wobei die Gesamtmenge an Dicarbonsäurekomponenten 100 Mol-% ausmacht. Als weitere Dicarbonsäurekomponenten kann der Polyester 0 bis 50 Mol-% 2,6-Naphthalat enthalten, jedenfalls wenn als Hauptkomponente Terephthalat eingesetzt wurde, oder 0 bis 50 Mol-% Terephthalat, wenn als Hauptkomponente Naphthalat verwendet wurde, oder 0 bis 20 Mol-% Isophthalat, vorzugsweise 0,5 bis 4 Mol-%, sowie 10 bis 60 Mol-% 4,4'-Diphenyldi-carboxylat. Andere Dicarbonsäurekomponenten wie 1,5-Naphthalindicarboxylat sollten einen Anteil von 30 Mol-%, bevorzugt von 10 Mol-%, insbesondere von 2 Mol-%, nicht überschreiten, währenddem Dicarbonsäurekomponenten wie Bibenzoat einen Anteil von 2 Mol-% nicht überschreiten sollten.

Als Diolkomponente enthält der erfindungsgemäße Polyester 10 bis 100 Mol-% Ethylenglykol (EG), wobei die Gesamtmenge an Diolkomponenten 100 Mol-% ausmacht. Der Anteil an Diethylenglykol sollte eine Menge von 10 Mol-% nicht überschreiten und liegt ideal zwischen 0,5 und 5 Mol-%. Andere Diolkomponenten wie Cyclohexandimethanol, 1,3-Propandiol, 1,4-Butandiol sollten einen Anteil von 50 Mol-% nicht überschreiten. Eine Ausnahme bildet die weitere Ausführungsform mit 1,4-Butandiol als Hauptdiolkomponente, die in einer Menge von 50 bis 100 Mol-% zulässig ist. Die Anteile an anderen Diolkomponenten liegen bevorzugt im Bereich von weniger als 30 Mol-%, besonders bevorzugt bei weniger als 10 Mol-%.

Neben den genannten Hauptpolymerbestandteilen Polyester und Schwarzpigment kann die Folie in weiteren Ausführungsformen bis zu 40 Gew.-%, bevorzugt bis zu 10 Gew.-%, besonders bevorzugt bis zu 5 Gew.-%, bezogen auf das Gewicht der Folie, andere Polymere wie Polyetherimide wie z. B. ®Ultem 1000 von GE Plastics Europe, NL, Polycarbonat wie z. B. ®Makrolon von Bayer, DE, oder Polyamide wie z. B. ®Ultramid von BASF, DE, u. ä. enthalten.

Allgemein werden die Polyester nach literaturbekannten Verfahren aus den genannten Diolen und Dicarbonsäure oder Dicarbonsäureester durch Polykondensation hergestellt. Die Herstellung der Polyester kann sowohl nach dem Umesterungsverfahren mit den üblichen Katalysatoren wie z. B. Zn-, Ca-, Li- und Mn-Salzen oder nach dem Direktveresterungsverfahren erfolgen. Um Nebeneffekte zu vermeiden, sollte der Gehalt an Umesterungskatalysator, bezogen auf das eingesetzte Metall, 200 ppm nicht übersteigen und liegt bevorzugt bei weniger als 100 ppm, besonders bevorzugt sogar bei weniger als 50 ppm. Bevorzugte Polykondensationskatalysatoren sind Antimon- oder Germaniumverbindungen. Besonders bevorzugt sind jedoch Titanverbindungen. Werden Antimonverbindungen eingesetzt, so liegt der Gehalt an Antimon in einer bevorzugten Ausführungsform bei weniger als 210 ppm und besonders bevorzugt bei weniger als 70 ppm. Bevorzugt wird Antimontriacetat (z. B. S21 von Atofina/Frankreich) eingesetzt.

Besonders bevorzugt werden titanbasierte Katalysatoren eingesetzt wie z. B. VERTEC AC420 von Johnson Matthey oder C94 von Acordis. Der Gehalt an Titan liegt dabei bevorzugt im Bereich unter 60 ppm und besonders bevorzugt sogar noch unter 20 ppm. Weiterhin hat es sich als günstig erwiesen, wenn alle Komponenten des Katalysatorsystems wie Umesterungskatalysatoren (z. B. Mangansalze) und phosphorhaltige Stabilisatoren (z. B. Polyphosphorsäure, Phosphorige Säure, Phosphorsäureester wie z. B. Ethylphosphat, Diethylphosphat, Phenylphosphat u. a.) und Polykondensationskatalysatoren wie Titanverbindungen zusammen einen Gehalt von 200 ppm, bevorzugt 100 ppm und besonders bevorzugt 75 ppm nicht überschreiten.

Es hat sich als günstig erwiesen, wenn bei der Polykondensation Stabilisatoren (Radikaifänger) wie Irganox 1010 oder 1425 oder 1222 (Ciba, Schweiz) in Konzentrationen zwischen 100 und 5000 ppm zugegeben werden, weil dadurch die Bildung von Gelteilchen deutlich reduziert wird.

Die Folie gemäß der Erfindung kann weiterhin anorganische oder organische Zusatzmittel enthalten, die zur Einstellung der Oberflächentopographie benötigt werden. Die Menge der eingesetzten Zusatzmittel ist abhängig von den verwendeten Substanzen und ihrer Teilchengröße. Ihre mittlere Teilchengröße liegt im allgemeinen im Bereich von 0,01 bis 30 µm, vorzugsweise von 0,1 bis 5 µm, und insbesondere von 0,3 bis 3,0 µm.

Geeignete Zusatzmittel zur Erzielung einer geeigneten Rauheit sind z. B. Kalziumcarbonat, Apatit, Siliziumdioxid, Titandioxid, Aluminiumoxid, vernetztes Polystyrol, vernetztes PMMA, Zeolithe und andere Silikate und Aluminiumsilikate.

Diese Zusatzmittel werden im allgemeinen in Mengen von 0,05 bis 30 Gew.-%, vorzugsweise 0,1 bis 1 Gew.-% eingesetzt.

Bei den Schwarzpigmenten für die erfindungsgemäße Folie handelt es sich um Eisenoxidschwarzpigmente der Formel Fe₃O₄ (CAS-Nr. 1317-61-9). Die erfindungsgemäße Folie enthält dieses Fe₃O₄ in einer Menge im Bereich von 0,5 bis 25 Gew.-%, bevorzugt von 1 bis 7 Gew.-%, besonders bevorzugt von 1,5 bis 5,5 Gew.-%. Die Folie enthält diese Pigmente jedoch nicht in Form von Fe₃O₄-Partikeln, da in diesem Fall Fe₃O₄-Partikel in Mengen zwischen 8 und 25 Gew.-% zugegeben werden müssten (abhängig von der Dicke der Folie), um die erfindungsgemäß angestrebte niedrige Transparenz zu erreichen. Bei derartig hohen Füllgraden wird jedoch die Laufsicherheit der Folie bei der Herstellung im Produktionsbetrieb negativ beeinflusst. Es werden deshalb anorganische Partikel z. B. Mica, Titandioxid, Siliziumdioxid oder Kalziumkarbonat eingesetzt, die mit Fe₃O₄ beschichtet wurden. Mit solchen Pigmenten lässt sich die niedrige Transparenz bereits mit Fe₃O₄-Mengen von 1 bis 7 Gew.-% erreichen, während die Laufsicherheit der Folie entscheidend verbessert ist. Besonders bevorzugt im Sinne der Erfindung sind Pigmente, die unter der Bezeichnung Microna^{®} Matte Black und Iriodin^{®} 600 Black Mica und Mica Black der Firma Merck (Darmstadt/Deutschland) am Markt erhältlich sind.

Die erfindungsgemäße Folie kann außerdem weitere Schwarzpigmente in Kombination mit den Eisenoxidschwarzpigmenten wie z. B. carbon black (Graphit/Ruß) oder Chrom/Kupfer-Spinell enthalten. Besonders bevorzugt ist die Kombination der Eisenoxidschwarzpigmente mit 0,1 bis 0,5 Gew.-% carbon black, da sich hierdurch ein noch tieferer Schwarzeindruck der Folie erreichen lässt. Carbon black hat aber, wie eingangs erwähnt, den Nachteil, dass die Reinigungszeiten nach der Produktion einer schwarzen Folie deutlich verlängert werden.

Die erfindungsgemäße Folie ist entweder ein- oder mehrschichtig. Die erfindungsgemäßen mehrschichtigen Folien bestehen aus einer Basisschicht B, mindestens einer Deckschicht A oder C und gegebenenfalls weiteren Zwischenschichten, wobei insbesondere ein dreischichtiger A-B-C-Aufbau bevorzugt ist. Für mehrschichtige Aufbauten ist es weiter vorteilhaft, wenn alle eingesetzten Polymere eine ähnliche Viskosität bei der gewünschten Extrusionstemperatur aufweisen. Die Deckschichten A und/oder C können gegebenenfalls weitere Funktionalitäten aufweisen wie Siegelfähigkeit, Hochglanz, Mattierung, Farbigkeit usw.

Die Dicke der Deckschicht/en wird unabhängig von den anderen Schichten gewählt und liegt bevorzugt im Bereich von 0,1 bis 10 µm, insbesondere 0,2 bis 5 µm, vorzugsweise 1 bis 3 µm, wobei beidseitig aufgebrachte Deckschichten bezüglich Dicke und Zusammensetzung gleich oder verschieden sein können. Die Dicke der Basisschicht ergibt sich entsprechend aus der Differenz von Gesamtdicke der Folie und der Dicke der aufgebrachten Deck- und Zwischenschicht/en und kann daher analog der Gesamtdicke innerhalb weiter Grenzen variieren.

Die erfindungsgemäßen Schwarzpigmente können prinzipiell in jede Schicht der Folie eingebracht werden. Sollten hochglänzende Oberflächen benötigt werden, hat es sich als günstig erwiesen, wenn die hochglänzende Schicht keine oder weniger als 0,3 Gew.-% Partikel, einschließlich der Schwarzpigmentpartikel, enthält. Bei siegelfähigen Deckschichten hat es sich ebenfalls als günstig erwiesen, wenn die Siegelschicht keine oder weniger als 0,3 Gew.-% Partikel, einschließlich der Schwarzpigmentpartikel, enthält.

Ebenso kann die Folie zur Einstellung weiterer Eigenschaften beschichtet werden. Typische Beschichtungen sind insbesondere haftvermittelnde Beschichtungen, antistatische Beschichtungen, schlupfverbessernd oder dehäsiv wirkende Beschichtungen. Es bietet sich an, diese zusätzlichen Beschichtungen über in-line coating mittels wässriger Dispersionen nach der Längs- und vor der Querstreckung auf die Folie aufzubringen.

Das Verfahren zur Herstellung der Folie sieht vor, dass die Folienrohstoffe in Extrudern aufgeschmolzen, homogenisiert, durch eine Breitschlitzdüse auf eine Kühlwalze ausgepresst und dort zu Vorfolie abgekühlt werden, danach die Vorfolie in Längs- und Querrichtung streckorientiert, hitzefixiert und schließlich aufgewickelt wird.

Wenn an der Folienherstellungsmaschine Zwei- oder Mehrschneckenextruder eingesetzt werden, dann können prinzipiell alle Einsatzstoffe direkt in den Extruder eindosiert werden.

Im allgemeinen hat es sich als günstig erwiesen, wenn die Schwarzpigmente bereits vor der Folienextrusion in einen Polyesterrohstoff als Masterbatch eingearbeitet wurden. Dieser Masterbatch enthält 1 bis 80 Gew.-% Fe₃O₄ und 99 bis 20 Gew.% Polymer. Besonders bevorzugt liegt der Gehalt an Fe₃O₄ in diesem Polyestermaster-batch bei 10 bis 50 Gew.-%. Die Fe₃O₄-haltigen Pigmente können dem Rohstoff dabei bereits bei der Herstellung aus den Monomeren (s.o. Herstellung der Polyester) oder als Partikel in das Polymer in einem Mehrschneckenextruder (Extrusionsmasterbatch) nach bekannten Verfahren eingebracht werden, was sich insbesondere bei höheren Partikelkonzentrationen von größer als 10 Gew.-% bewährt hat.

Die Rohstoffe werden bevorzugt vorgetrocknet, wobei bei Verwendung von Zwei- oder Mehrschneckenextrudern in der Extrusion auf die Trocknung verzichtet werden kann. Die Vortrocknung beinhaltet ein graduelles Erhitzen der Masterbatche unter reduziertem Druck von 20 bis 80 mbar, vorzugsweise von 30 bis 60 mbar, insbesondere von 40 bis 50 mbar, sowie Rühren und gegebenenfalls Nachtrocknen bei konstanter, erhöhter Temperatur, vorzugsweise ebenfalls unter reduziertem Druck. Die Masterbatche werden vorzugsweise bei Raumtemperatur aus einem Dosierbehälter in der gewünschten Abmischung zusammen mit dem Polyesterrohstoff und gegebenenfalls anderen Rohstoffkomponenten chargenweise in einen Vakuumtrockner eingeschleust, der im Laufe der Trocken- bzw. Verweilzeit ein Temperaturspektrum von 10 bis 160 °C, vorzugsweise von 20 bis 150 °C, insbesondere 30 bis 130 °C durchläuft. Während der etwa 6-stündigen, vorzugsweise 5-stündigen, insbesondere 4-stündigen, Verweilzeit wird die Rohstoffmischung mit 10 bis 70 Upm, vorzugsweise mit 15 bis 65 Upm, insbesondere mit 20 bis 60 Upm, gerührt. Das so vorkristallisierte bzw. vorgetrocknete Rohstoffgemisch wird in einem nachgeschalteten ebenfalls evakuierten Behälter bei 90 bis 180 °C, vorzugsweise 100 bis 170 °C, insbesondere 110 bis 160 °C, für 2 bis 8 Stunden, vorzugsweise 3 bis 7 Stunden, insbesondere 4 bis 6 Stunden, nachgetrocknet.

Die Masterbatche sowie die übrigen Rohstoffe können aber auch bei Verwendung von Zwei- und Mehrschneckenextrudern ohne Vortrocknung direkt extrudiert werden.

Bei dem bevorzugten Extrusions- oder Koextrusionsverfahren zur Herstellung der Folie wird so vorgegangen, dass die den einzelnen Schichten der Folie entsprechenden Schmelzen durch eine Flachdüse extrudiert bzw. koextrudiert und als weitgehend amorphe Vorfolie auf einer Kühlwalze abgeschreckt werden. Im Falle einer einschichtigen Folie wird demgemäß nur eine Schmelze durch die Düse extrudiert. Diese Folie wird anschließend erneut erhitzt und in Längs- und Querrichtung bzw. in Quer- und Längsrichtung bzw. in Längs-, in Quer- und nochmals in Längsrichtung und/oder Querrichtung streckorientiert ("orientiert"). Die Folientemperaturen im Streckprozess liegen im allgemeinen 10 bis 60 °C über der Glasübergangstemperatur T_{g} des verwendeten Polyesters, das Streckverhältnis der Längsstreckung liegt üblicherweise bei 2,0 bis 6,0, insbesondere bei 2,0 bis 3,5, das der Querstreckung bei 2,0 bis 5,0, insbesondere bei 3,0 bis 4,5, und das der gegebenenfalls durchgeführten zweiten Längs- und Querstreckung bei 1,1 bis 5,0. Die erste Längsstreckung kann auch gleichzeitig mit der Querstreckung als Simultanstreckung durchgeführt werden.

Nach der Streckorientierung folgt die Thermofixierung der Folie bei Ofentemperaturen von 180 bis 260 °C, insbesondere von 220 bis 250 °C. Anschließend wird die Folie abgekühlt und aufgewickelt.

In einer bevorzugten Ausführungsform findet die Thermofixierung zwischen 160 bis 250 °C statt, und die Folie wird bei dieser Temperatur bevorzugt um mindestens 1 %, bevorzugt um mindestens 2 %, besonders bevorzugt um mindestens 4 %, in Querrichtung relaxiert.

In einer weiteren bevorzugten Ausführungsform wird die Folie mindestens um den Faktor 3,0 gleichzeitig in Längs- und Querrichtung gestreckt, wobei die Streckung in einem Simultanrahmen stattfindet. Die Thermofixierung findet bei Temperaturen im Bereich von 160 bis 250 °C statt, und die Folie kann bei diesen Temperaturen in Querrichtung und bevorzugt auch in Längsrichtung relaxiert werden.

Die erfindungsgemäßen ein- oder mehrschichtigen Folien weisen die angestrebten niedrigen Transparenzen auf, und überraschend waren auch die Spülzeiten zwischen Typwechseln im Produktionsbetrieb zeitlich um mindestens 50 % gegenüber Folien mit Carbon Black verkürzt.

Die Messung der einzelnen Eigenschaften erfolgt dabei gemäß der folgenden Normen bzw. Verfahren.

### Messmethoden

### Messung der Transparenz und Trübung

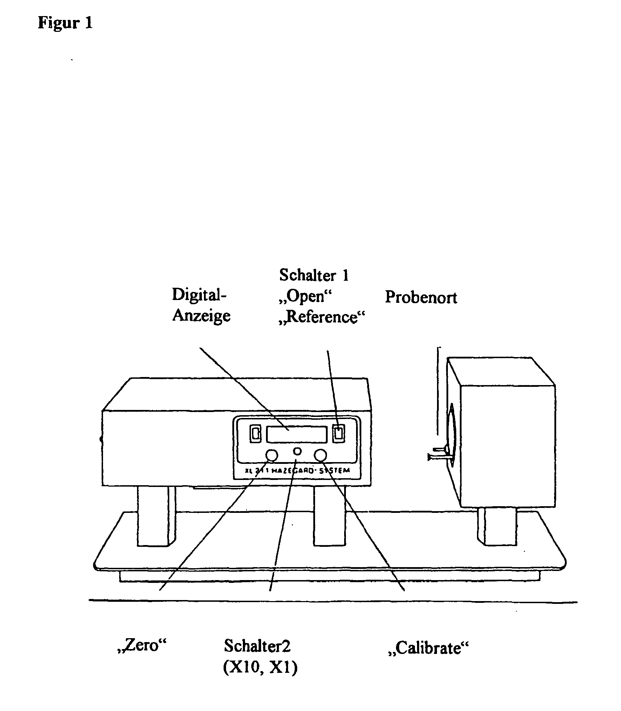

Die Messung erfolgt an dem Hazegard Hazemeter XL-211 der Fa. BYK Gardner (s. Figur 1). Das Messgerät ist 30 Minuten vor der Messung einzuschalten. Es ist darauf zu achten, dass der Lichtstrahl durch die Kugel zentrisch an die Austrittsöffnung geht.

### Herstellung, Form und Anzahl der Proben

Aus der zu untersuchenden Folie werden je 5 Proben mit einer Größe von 100 x 100 mm ausgeschnitten. Die Längs- und Querrichtung werden am Rand gekennzeichnet, da die Messungen in beiden Maschinenrichtungen erfolgen.

### Messung der Transparenz und Trübung

Schalter 1 "OPEN" drücken
Schalter 2 auf "X10" einstellen und mit dem "Zero"-Knopf Digitalanzeige auf 0.00 kalibrieren
Umschalten des Schalters 1 auf "Referenz" und des Schalters 2 auf "X1"
Mit dem "Calibrate"-Knopf Digitalanzeige auf 100 bringen
Probe in Längsrichtung einlegen
Anzeigewert für die Transparenz ablesen
Die Digitalanzeige mit dem "Calibrate"-Knopf auf 100 kalibrieren
Schalter 1 auf "OPEN" stellen
Anzeigewert für die Trübung in Längsrichtung ablesen
Probe in Querrichtung drehen
Anzeigewert für die Trübung in Querrichtung ablesen

### Auswertung

Die Transparenz und Trübung erhält man durch die Mittelung der jeweiligen 5 Einzelwerte.

### Ausführungsbeispiele:

### Folienherstellung

Polyester-Chips wurden gemäß den in den Beispielen angegebenen Verhältnissen gemischt und 2 Stunden bei 140 °C getrocknet und in Extrudern, bei Monofolie in einem Einschneckenextruder und bei coextrudierter Folie jeweils in Zweischneckenextrudern, aufgeschmolzen. Der/die geschmolzene/n Polymerstrang/-stränge wurde/n durch eine Düse extrudiert. Bei Coextrusion erfolgte die Zusammenführung der Polymerstränge in einer Coextrusionsdüse. Der/die Polymerstrang/-stränge wurde/n über eine Abzugswalze mit einer Temperatur von 20 °C zu einer Vorfolie abgezogen. Die Vorfolie wurde um den Faktor 3,5 in Maschinenrichtung bei 116 °C (= Folientemperatur im Streckspalt) gestreckt, danach wurde in einem Rahmen bei einer Temperatur von 110 °C eine Querstreckung um den Faktor 3,6 durchgeführt. Anschließend wurde die Folie bei 210 °C thermofixiert und in Querrichtung um 3 % bei Temperaturen von 216 bis 200 °C und ein weiteres mal um 1 % bei Temperaturen zwischen 180 und 150 °C relaxiert. Die Produktionsgeschwindigkeit (Folienendgeschwindigkeit) betrug 150 m/min.

In den Beispielen kommen die folgenden Rohstoffe zum Einsatz:

### Rohstoff R1

100 Gew.-% Polyethylenterephtalat RT49 der Firma Kosa (Deutschland)

### Rohstoff R2

10 Gew.-% Micron® Matte Black der Firma Merck KGaA (Deutschland) und 90 % Polyethylenterephthalat gemäß R1. Die Zugabe der Pigmente erfolgte während der Polymerherstellung aus den Monomeren Dimethyterephthalat und Ethylenglykol. Der Gehalt an Fe₃O₄ betrug 7 Gew.-%.

### Rohstoff R 3

50 Gew.-% Microna® Matte Black der Firma Merck KGaA (Deutschland) und 50 Gew.-% Polyethylenterephthalat gemäß R1. Die Zugabe der Pigmente erfolgte in einem handelsüblichen Zweischneckenextruder der Firma Leistritz (ZSE 40 HP - 44D). Der Gehalt an Fe₃O₄ betrug 35,5 %.

### Rohstoff R4

Polyethylenterephthalat-Masterbatch mit 20 Gew.-% Ruß NE9AAA17693 Renol-Schwarz (Clariant/Deutschland)

### Rohstoff R5

10 Gew.-% IRIODIN® 600 Black Mica der Firma Merck KGaA (Deutschland) und 90 Gew.-% Polyethylenterephthalat gemäß R1. Die Zugabe der Pigmente erfolgte während der Polymerherstellung aus den Monomeren Dimethyterephthalat und Ethylenglykol. Der Gehalt an Fe₃O₄ betrug 5 %.

### Rohstoff R6

Polyethylenterephtalatrohstoff mit 22 Mol-% IPA (Isophthalsäure) der Firma Kosa (Deutschland).

### Rohstoff R7

98 Gew.-% Polyethylenterephtalat und 2 % SiO₂ (Sylobloc 44H mit D₅₀ = 2,7 der
Firma Grace/Deutschland)

Es wurden wie unter "Folienherstellung" beschrieben Monofolien und Dreischichtfolien hergestellt.

Die Folie aus Beispiel 6 ist siegelfähig.

Die Rohstoffzusammensetzung und Eigenschaften der Folie können den folgenden Tabellen entnommen werden.

| Beispiel | R1 in % | R2 in % | R3 in % | R4 in % | R5 in % | R6 in % | R7 in % | Dicke ges. in µm | Transparenz in % |
|---|---|---|---|---|---|---|---|---|---|
| 1 | | 100 | | | | | | 25 | 0,3 |
| 2 | 80 | | 20 | | | | | 25 | 0,5 |
| 3 | | | | | 100 | | | 25 | 0,4 |
| 4 | | 100 | | | | | | 100 | 0,06 |
| 5 | 78 | | 20 | 2 | | | | 40 | 0,2 |

| Beispiel | Schicht | R1 | R5 | R6 | R7 | Dicke Schicht in µm | Transparenz in % |
|---|---|---|---|---|---|---|---|
| 6 | A | 90 | | | 10 | 4 | 0,2 |
| | B | | 100 | | | 40 | |
| | C | | | 100 | | 4 | |

## Patentansprüche

1. Ein- oder mehrschichtige, orientierte Folie aus einem Polyester, die mindestens ein anorganisches Schwarzpigment enthält, **dadurch gekennzeichnet, dass** sie mindestens eine Schicht umfasst, die neben Polyester anorganische Partikel aus Mica, Titandioxid, Siliziumdioxid oder Kalziumkarbonat enthält, die mit Fe₃O₄ beschichtet sind, wobei die Fe₃O₄-Menge in der Folie 0,5 bis 25 Gew.-% beträgt.

2. Folie nach Anspruch 1, **dadurch gekennzeichnet, dass** sie eine Transparenz von kleiner/gleich 12 %, vorzugsweise von kleiner/gleich 3 %, besonders bevorzugt von kleiner/gleich 0,5 % aufweist.

3. Folie nach einem der Ansprüche 1 oder 2, **dadurch gekennzeichnet, dass** sie eine Dicke im Bereich von 4 bis 500 µm besitzt, bevorzugt von 8 bis 200 µm, besonders bevorzugt von 12 und 100 µm.

4. Folie nach einem der Ansprüche 1 bis 3, **dadurch gekennzeichnet, dass** sie Polyester enthält, die auf Terephthalsäure oder 2,6-Naphthalindicarbonsäure als Dicarbonsäurekomponente und auf Ethylenglykol als Diolkomponente basieren, die aber auch 1,4-Butandiol als Hauptdiolkomponente enthalten können.

5. Folie nach einem der Ansprüche 1 bis 4, **dadurch gekennzeichnet, dass** sie Polyester enthält, die zusätzlich noch andere Dicarbonsäure-komponenten wie 1,5-Naphthalindicarboxylat in einer Menge von bis zu 30 Mol-%, bevorzugt von bis zu 10 Mol-%, oder andere Dicarbonsäurekomponenten wie Bibenzoat in einer Menge von bis zu 2 Mol-% enthalten, bezogen jeweils auf die gesamte Molmasse an Dicarbonsäurekomponente.

6. Folie nach einem der Ansprüche 1 bis 5, **dadurch gekennzeichnet, dass** sie anorganische oder organische Zusatzmittel enthält, in einer Menge von 0,05 bis 30 Gew.-%, vorzugsweise von 0,1 bis 1 Gew.-%, mit einer mittleren Teilchengröße im Bereich von 0,01 bis 30 µm, vorzugsweise von 0,1 bis 5 µm, insbesondere von 0,3 bis 3,0 µm.

7. Folie nach Anspruch 6, **dadurch gekennzeichnet, dass** sie als Zusatzmittel Kalziumcarbonat, Apatit, Siliziumdioxid, Titandioxid, Aluminiumoxid, vernetztes Polystyrol, vernetztes PMMA, Zeolithe und andere Silikate und Aluminiumsilikate enthält.

8. Folie nach einem der Ansprüche 1 bis 7, **dadurch gekennzeichnet, dass** die Fe₃O₄-Menge in der Folie 1 bis 7 Gew.-% beträgt.

9. Folie nach einem der Ansprüche 1 bis 8, **dadurch gekennzeichnet, dass** sie zusätzlich noch weitere Schwarzpigmente wie carbon black (= Graphit/Ruß) oder Chrom/Kupfer-Spinell in einer Menge von 0,1 bis 0,5 Gew.-%, bezogen auf das Gewicht der Folie, in Kombination mit den Eisenoxid beschichteten Pigmenten enthält.

10. Verfahren zum Herstellen einer Folie nach einem der Ansprüche 1 bis 9 durch Aufschmelzen der Folienrohstoffe in Extrudern und Homogenisieren, durch Auspressen der homogenisierten Rohstoffe durch eine Breitschlitzdüse auf eine Kühlwalze und Abkühlen zu einer Vorfolie, durch Streckorientieren der Vorfolie in Längs- und Querrichtung und anschließendes Hitzefixieren, **dadurch gekennzeichnet, dass** die Schwarzpigmente vor der Folienextrusion in einen Polyesterrohstoff als Masterbatch eingearbeitet werden, der 1 bis 80 Gew.-% Fe₃O₄ und 99 bis 20 Gew.% Polymer enthält.

11. Verfahren nach Anspruch 10, **dadurch gekennzeichnet, dass** die Rohstoffe vorgetrocknet werden, wobei ein graduelles Erhitzen des Masterbatches unter reduziertem Druck von 20 bis 80 mbar, vorzugsweise von 30 bis 60 mbar, insbesondere von 40 bis 50 mbar, sowie Rühren und gegebenenfalls Nachtrocknen bei konstanter, erhöhter Temperatur, vorzugsweise ebenfalls unter reduziertem Druck durchgeführt wird.

12. Verwendung einer Folie nach einem der Ansprüche 1 bis 9 als undurchsichtige Zwischenschicht in Verbundmaterialien oder zu Dekorationszwecken.

## Claims

1. A single- or multilayer, oriented film composed of a polyester and comprising at least one inorganic black pigment, which film encompasses at least one layer which comprises, alongside polyester, inorganic particles composed of mica, titanium dioxide, silicon dioxide, or calcium carbonate, which have been coated with Fe₃O₄, where the amount of Fe₃O₄ in the film is from 0.5 to 25 % by weight.

2. The film as claimed in claim 1, whose transparency is smaller than or equal to 12 %, preferably smaller than or equal to 3 %, particularly preferably smaller than or equal to 0.5 %.

3. The film as claimed in either of claims 1 and 2, whose thickness is in the range from 4 to 500 µm, preferably from 8 to 200 µm, particularly preferably from 12 to 100 µm.

4. The film as claimed in any of claims 1 to 3, which comprises polyesters which are based on terephthalic acid or on 2,6-naphthalenedicarboxylic acid as dicarboxylic acid component and on ethylene glycol as diol component, but which polyesters can also comprise 1,4-butanediol as main diol component.

5. The film as claimed in any of claims 1 to 4, which comprises polyesters which also contain an amount of up to 30 mol %, preferably of up to 10 mol %, of other dicarboxylic acid components such as 1,5-naphthalenedicarboxylate, or an amount of up to 2 mol % of other dicarboxylic acid components such as bibenzoate, based in each case on the entire molar amount of dicarboxylic acid component.

6. The film as claimed in any of claims 1 to 5, which comprises an amount of from 0.05 to 30 % by weight, preferably from 0.1 to 1 % by weight, of inorganic or organic additives whose average particle size is in the range from 0.01 to 30 µm, preferably from 0.1 to 5 µm, in particular from 0.3 to 3.0 µm.

7. The film as claimed in claim 6, in which the additives present comprise calcium carbonate, apatite, silicon dioxide, titanium dioxide, aluminum oxide, crosslinked polystyrene, crosslinked PMMA, zeolites, and other silicates, and aluminum silicates.

8. The film as claimed in any of claims 1 to 7, which comprises an amount of from 1 to 7 % by weight of Fe₃O₄.

9. The film as claimed in any of claims 1 to 8, which also comprises an amount of from 0.1 to 0.5 % by weight, based on the weight of the film, of other black pigments, such as carbon black (= graphite/carbon black) or chromium/copper spinel, in combination with the iron-oxide-coated pigments.

10. A process for production of a film as claimed in any of claims 1 to 9, by melting the raw materials for the film in extruders and homogenizing, by extrusion of the homogenized raw materials through a flat-film die onto a chill roll and cooling to give a prefilm, and by longitudinal and transverse stretch-orientation of the prefilm, and then heat-setting, which comprises, prior to extrusion of the film , incorporating the black pigments into a polyester in the form of a masterbatch, comprising from 1 to 80 % by weight of Fe₃O₄ and from 99 to 20 % by weight of polymer.

11. The process as claimed in claim 10, wherein the raw materials are predried by gradual heating of the masterbatch under reduced pressure of from 20 to 80 mbar, preferably of from 30 to 60 mbar, in particular of from 40 to 50 mbar, and also stirring and, if appropriate, after-drying at a constant, elevated temperature, preferably likewise under reduced pressure.

12. The use of a film as claimed in any of claims 1 to 9 as non-transparent intermediate layer in composite materials, or for decorative purposes.

## Revendications

1. Film mono- ou multicouche, orienté, à base d'un polyester, qui contient au moins un pigment noir inorganique, **caractérisé en ce qu'**il comprend au moins une couche qui, outre du polyester, contient des particules inorganiques de mica, dioxyde de titane, dioxyde de silicium ou carbonate de calcium, qui sont enrobées de Fe₃O₄, la quantité de Fe₃O₄ dans le film allant de 0,5 à 25 % en poids.

2. Film selon la revendication 1, **caractérisé en ce qu'**il présente une transparence inférieure ou égale à 12 %, de préférence inférieure ou égale à 3 %, de façon particulièrement préférée, inférieure ou égale à 0,5 %.

3. Film selon la revendication 1 ou 2, **caractérisé en ce qu'**il a une épaisseur dans la plage de 4 à 500 µm, de préférence de 8 à 200 µm, de façon particulièrement préférée, de 12 à 100 µm.

4. Film selon l'une quelconque des revendications 1 à 3, **caractérisé en ce qu'**il contient des polyesters qui sont à base d'acide téréphtalique ou d'acide 2,6-naphtalènedicarboxylique en tant que composant acide dicarboxylique et d'éthylèneglycol en tant que composant diol, mais qui peuvent également contenir du 1,4-butanediol en tant que principal composant diol.

5. Film selon l'une quelconque des revendications 1 à 4, **caractérisé en ce qu'**il contient des polyesters qui en outre contiennent encore d'autres composants acide dicarboxylique, tels que du 1,5-naphtalènedicarboxylate en une proportion allant jusqu'à 30 % en moles, de préférence jusqu'à 10 % en moles, ou d'autres composants acide dicarboxylique tels que du bibenzoate en une proportion allant jusqu'à 2 % en moles, chaque fois par rapport à la masse totale en moles du composant acide dicarboxylique.

6. Film selon l'une quelconque des revendications 1 à 5, **caractérisé en ce qu'**il contient des additifs organiques ou inorganiques, en une proportion de 0,05 à 30 % en poids, de préférence de 0,1 à 1 % en poids, ayant une taille moyenne de particules dans la plage de 0,01 à 30 µm, de préférence de 0,1 à 5 µm, en particulier de 0,3 à 3,0 µm.

7. Film selon la revendication 6, **caractérisé en ce qu'**il contient en tant qu'additif du carbonate de calcium, de l'apatite, du dioxyde de silicium, du dioxyde de titane, de l'oxyde d'aluminium, du polystyrène réticulé, du PMMA réticulé, des zéolithes et d'autres silicates et silicates d'aluminium.

8. Film selon l'une quelconque des revendications 1 à 7, **caractérisé en ce que** la proportion de Fe₃O₄ dans le film va de 1 à 7 % en poids.

9. Film selon l'une quelconque des revendications 1 à 8, **caractérisé en ce qu'**en outre il contient encore d'autres pigments noirs tels que le noir de carbone (= graphite/noir de fumée) ou du spinelle de chrome/cuivre en une proportion de 0,1 à 0,5 % en poids, par rapport au poids du film, en association avec les pigments enrobés d'oxyde de fer.

10. Procédé pour la fabrication d'un film selon l'une quelconque des revendications 1 à 9, par fusion des matières premières du film dans des extrudeuses et homogénéisation, par extrusion des matières premières homogénéisées à travers une filière plate, sur un cylindre refroidisseur, et refroidissement en un préfilm, par orientation par étirage du préfilm dans le sens longitudinal et le sens transversal, et thermofixage subséquent, **caractérisé en ce que** les pigments noirs sont incorporés dans une matière première de polyester, avant l'extrusion du film, sous forme de mélange-maître qui contient de 1 à 80 % en poids de Fe₃O₄ et de 99 à 20 % en poids de polymère.

11. Procédé selon la revendication 10, **caractérisé en ce que** les matières premières sont préséchées, un chauffage graduel du mélange-maître étant effectué sous pression réduite, de 20 à 80 mbars, de préférence de 30 à 60 mbars, en particulier de 40 à 50 mbars, ainsi que sous agitation, et éventuellement un post-séchage étant effectué à une température élevée constante, de préférence également sous pression réduite.

12. Utilisation d'un film selon l'une quelconque des revendications 1 à 9, en tant que couche intermédiaire opaque dans des matériaux composites ou à des fins décoratives.
